# EUROPEAN PATENT APPLICATION

(11) **EP 4 773 069 A1**
(43) Date of publication of application: **08.07.2026**
(21) Application number: 25150002.1
(22) Date of filing: 02.01.2025
(51) Int. Cl.: G06Q 40/02, G06Q 20/02

(54) **SYSTEM FOR PARTIAL SETTLEMENT OF BULK PAYMENT PROCESSING AND REDUCING PERSONAL DATA TRANSMISSION**

(71) Applicant: Mastercard International Incorporated, Purchase, New York 10577 (US)
(72) Inventor: CHRISTENSEN, Kenneth Lundgaard, Frederiksberg C (DK); POULSEN, Dorte, Rødovre (DK); ECKRICH, Joris, Trollhättan (SE); NORDTUG, Rita, Løken (NO)
(74) Representative: Gill Jennings & Every LLP

(57) **Abstract**

Systems and methods are disclosed for bulk payment processing and for execution by a service provider system. One or more transaction files may be received from one or more financial institution systems, and the transaction file may be processed to determine a first set of instructions. This first set of instructions may then be sent to a settlement agent system, and a rejection message may be received in return that at least one instruction cannot be executed. In embodiments of the invention, this at least one instruction may be removed to give a second set of instructions which is automatically resent to the settlement agent system.

## Description

### FIELD OF THE INVENTION

The invention relates to a system for bulk payment processing and a computer-implemented method of processing bulk payments.

### BACKGROUND

A bulk payment system (also known as a "batch payment system" but herein referred to as a "bulk payment system") enables an entity, such as a bank, financial institution (e.g., pension fund, investment manager, etc.), company, or organisation, to make payments to multiple beneficiaries at the same time. Bulk payment systems are also known as batch payment processing, mass payments, payouts or batch out systems.

Bulk payment systems are used by companies to transfer funds for a variety of different purposes but are commonly used to make payments to vendors, salary payments to employees, dividends to shareholders. Generally, each bulk payment request is made from a single account but may utilise different payment methods for transferring funds.

Bulk payment systems provide timely, scalable, and cost-effective processing of a number of payments. Timely payments are secured through system flexibility and a range of configurations that ensure settlement and file processing happen on-time.

Entities can perform bulk payments by submitting transaction files to the bulk payment system. The bulk payment system may receive transaction files from several different entities at the same time. The bulk payment system then performs inbound payment processing by validating the transactions and calculating the settlement positions. The bulk payment system then performs settlement with the Settlement Agent. Once the bulk payment has been processed, the bulk payment system performs outbound payment processing by sending payments and files to receiving entities and sending response files to the originating entities.

Bulk payment systems provide a highly scalable solution that can support the deployment of multiple clearing components simultaneously. Due to the scale, processing large numbers of transactions from different entities simultaneously also provide cost saving in the processing costs and can reduce liquidity requirements for entities using the net upon net effect. Moreover, as bulk payment systems support existing transmission or messaging protocols, they can be integrated with new and existing infrastructure solutions.

However, bulk payment systems rely, for example, on sufficient liquidity. In the event a single entity party to a bulk payment process has insufficient liquidity at the settlement institution, the entire bulk payment is rejected and is sent back to the entities for retransmission. This occurs even if there is sufficient liquidity to process some of the payments. Another example of a condition which may interrupt transactions of bulk payment systems is that a financial institution, bank, or account involved in a transaction is suspended, for example, due to illegal activities or compromised security (e.g., from malicious hacking). As above, in the event of a suspension affecting a single entity party to a bulk payment process, the entire bulk payment is rejected and is sent back to the entities for retransmission. Not only do these events delay the processing of payments, but they also require personal data to be transmitted, and retransmitted, over the network more times than necessarily. The repeated transmission of sensitive data across a network can pose a potential security vulnerability and/or risk to data privacy, for example in the event of man-in-the-middle attacks.

It is desirable therefore to provide a system that removes or ameliorates at least one of the abovementioned drawbacks or to provide a useful alternative. Accordingly, there exists a need to provide a bulk payment system that can provide timely, scalable, and cost-effective processing for a large number of payments, with secure and efficient transfer of data, and which is sufficiently robust to handle instances of insufficient liquidity or financial suspension.

### SUMMARY OF INVENTION

The object of the invention is addressed by the features of the appended independent claims. Further aspects of the invention are defined in the appended dependent claims.

In accordance with a first aspect of the invention, there is provided a computer-implemented method for bulk payment processing, the method comprising: receiving, by a service provider system, one or more transaction files from one or more financial institution systems; processing, by the service provider system, the transaction file to determine a first set of instructions; sending, by the service provider system to a settlement agent system, the first set of instructions; receiving, by the service provider system, a rejection message from the settlement agent system that at least one instruction of the first set of instructions cannot be executed; removing, by the service provider system, the at least one instruction that cannot be executed from the first set of instructions to give a second set of instructions, the second set of instructions differing from the first set of instructions; and sending, by the service provider system, the second set of instructions to the settlement agent system.

The removal of the at least one instruction that cannot be executed from the first set of instructions to give a second set of instructions increases the amount of instructions that can be completed. By modifying the set of instructions, rather than rejecting them outright, fewer instructions need to be resubmitted over data links between financial institutions and service provider systems. As a result, embodiments of the present invention may reduce data transfer overheads on the network between the financial institution and the service provider system, improve data security and privacy of transactions, and reduce the average time taken to carry out a transaction or instruction.

Optionally, the method may comprise sending, by the service provider system, an indication of the at least one instruction that cannot be executed to a corresponding financial institution system of the one or more financial institution systems.

Optionally, the method may comprise receiving, by a service provider system and from the corresponding financial institution system, an additional set of transaction files, the additional set of transaction files at least indicative of the at least one instruction that cannot be executed.

Only those transactions that originally failed need be resubmitted over data links between financial institutions and service provider systems, resulting in the advantages discussed above.

Optionally, each instruction of the first set of instructions is associated with an assignment of a quantity of a resource from a first participant associated with the instruction to a second participant associated with the instruction.

Optionally, the at least one instruction that cannot be executed is not able to be executed because the first participant does not have a sufficient quantity of said resource.

Advantageously, embodiments of the invention may adaptively adjust to reduce the impact of one or more participants not having sufficient liquidity to perform a transaction, by removing the affected transactions and recalculating based transactions based on the adjustments.

In accordance with a second aspect of the invention, there is provided a system for bulk payment processing, the system comprising: a service provider system, the service provider system configured to: receive one or more transaction files from one or more financial institution systems; process the transaction file to determine a first set of instructions; send the first set of instructions to a settlement agent system; receive a rejection message from the settlement agent system that at least one instruction of the first set of instructions cannot be executed; based on the rejection message, increasing (preferably maximising) the amount of instructions that can be completed by removing the at least one instruction that cannot be executed from the first set of instructions to give a second set of instructions, the second set of instructions differing from the first set of instructions; and send the second set of instructions to the settlement agent system.

By modifying the set of instructions, rather than rejecting them outright, fewer instructions need to be resubmitted over data links between financial institutions and service provider systems. As a result, embodiments of the present invention may reduce data transfer overheads on the network between the financial institution and the service provider system, improve data security and privacy of transactions, and reduce the average time taken to carry out a transaction or instruction.

Optionally, the service provider system is further configured to send an indication of the at least one instruction that cannot be executed to a corresponding financial institution system of the one or more financial institution systems.

Optionally, the service provider system is further configured to receive from the corresponding financial institution system, an additional set of transaction files, the additional set of transaction files at least indicative of the at least one instruction that cannot be executed.

Only those transactions that originally failed need be resubmitted over data links between financial institutions and service provider systems, resulting in the advantages discussed above.

Optionally, each instruction of the first set of instructions is associated with an assignment of a quantity of a resource from a first participant associated with the instruction to a second participant associated with the instruction, and the at least one instruction that cannot be executed is not able to be executed because the first participant does not have a sufficient quantity of said resource.

Advantageously, embodiments of the invention may adaptively adjust to reduce the impact of one or more participants not having sufficient liquidity to perform a transaction or being suspended from the financial system, by removing the affected transactions and recalculating based transactions based on the adjustments.

Optionally, the service provider system may be configured to (e.g., before sending the one or more transaction files) remove data from the first set of instructions from which participants associated with the one or more transaction files may be identified by a third party.

Optionally, the settlement agent system is an external clearing system.

Optionally, the service provider system is a bulk payment system.

In accordance with a third aspect of the invention, there is provided a computer program product comprising instructions which, when the program is executed by a computer, cause the computer to carry out methods as disclosed herein.

In accordance with a fourth aspect of the invention, there is provided a computer-readable storage medium comprising instructions which, when executed by a computer, cause the computer to carry out methods as disclosed herein.

It will be understood by a skilled person that any apparatus feature described herein may be provided as a method feature, and vice versa. It will also be understood that particular combinations of the various features described and defined in any aspects described herein can be implemented and/or supplied and/or used independently.

Moreover, it will be understood that the present invention is described herein purely by way of example, and modifications of detail can be made within the scope of the invention. Furthermore, as used herein, and "means plus function" features may be expressed alternatively in terms of their corresponding structure.

### BRIEF DESCRIPTION OF DRAWINGS

One or more embodiments will now be described, purely by way of example, with reference to the accompanying figures, in which:
Figure 1 is an overview of a bulk processing system.
Figure 2 depicts a method for bulk payment processing according to an embodiment of the present invention.
Figure 3 depicts a method for bulk payment processing according to an embodiment of the present invention.

### DETAILED DESCRIPTION

In the following description and accompanying drawings, corresponding features may preferably be identified using corresponding reference numerals to avoid the need to describe said common features in detail for each and every embodiment.

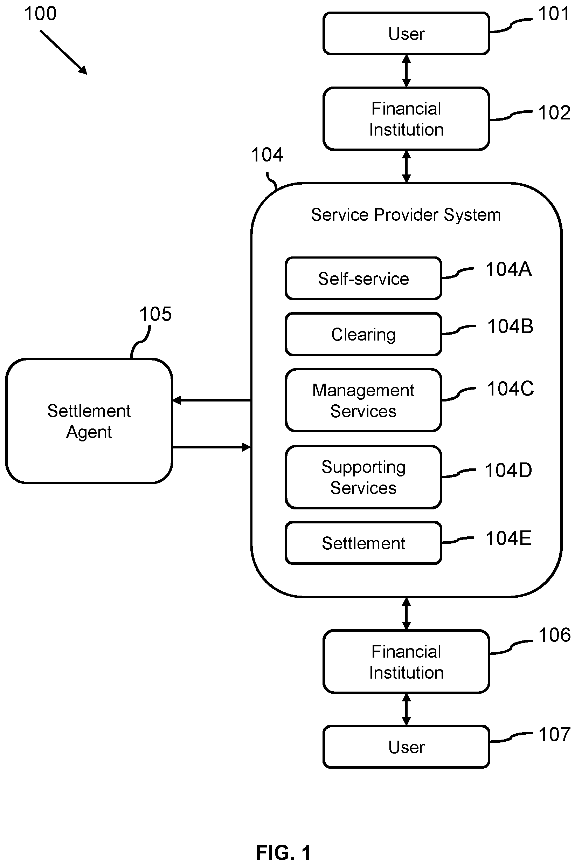

Service provider systems, such as described with respect to Figure 1 may provide bulk processing of payments or transactions (e.g., of a currency, such as the Euro). The provision of bulk processing of payments involves the transfer of sensitive information, for example, personal and financial details of payers and payees involved in transactions. Sensitive information may be removed or anonymised when transferring data between a service provider system and a settlement agent, as discussed below, which may reduce the risk of sensitive data being compromised during this transfer. However, when transferring data between a service provider system and financial institutions (e.g., which may represent participants in transactions), it may be required that sensitive data is transferred in order that a transaction may be arranged or carried out. Therefore, the transfer of data between a service provider and a financial institution may be a "weak link" in the security of bulk payment processing. The repeated transmission of sensitive data across a network can pose a potential security or privacy vulnerability, for example in the event of man-in-the-middle attacks. Further, said sensitive information may require substantial data transfer capacity or overheads.

It may be desirable to develop systems and methods to improve data security and/or privacy, reduce data transfer capacity or overheads, and/or reduce the time taken to carry out transactions. Embodiments of the present invention may address these problems by addressing the need to send as many files between service providers and financial institutions as is required by methods and systems of the prior art.

Embodiments of the invention provide an adaptive method for altering a proposed bulk payment when specific transactions thereof cannot be carried out (e.g., due to a lack of liquidity or suspension of a participant), which may be particularly advantageous where other transactions of the proposed bulk payment are still possible. This contrasts to prior art systems and methods, wherein the entire proposed bulk payment may be rejected in the same scenario. If an entire, proposed bulk payment is rejected, the respective financial institutions are notified by transfer of a message between the service provider and the financial institution. Should the financial institutions still wish to carry out the transactions (which they commonly do, particularly for those transactions that are still possible), information, including sensitive information, must be resubmitted over the data link between the service provider and the financial institution for each transaction that makes up the bulk payment.

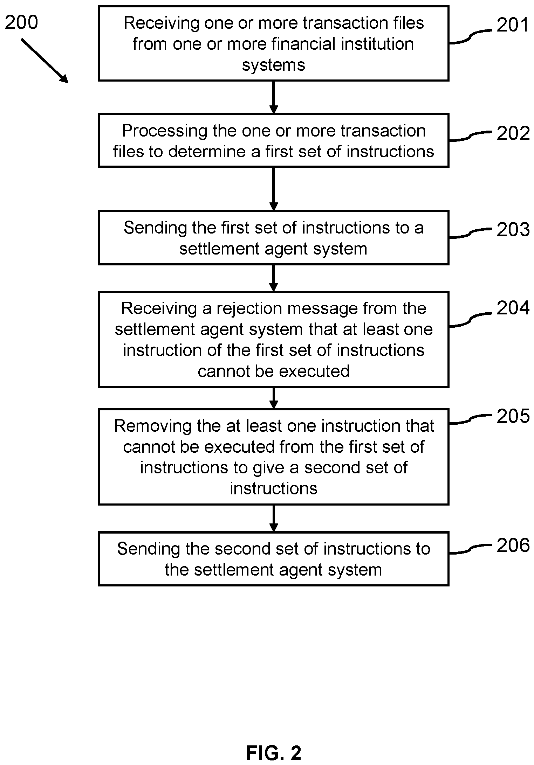

Through the adaptive method of the present invention (Figure 2), fewer transactions or transaction files need to be resent over the data link between the service provider and the financial institution, as well as fewer messages from the service provider to the financial institution. As a result, embodiments of the present invention may reduce data transfer overheads on the network between the financial institution and the service provider system, improve data security and/or privacy of transactions, and reduce the average time taken to carry out a transaction or instruction. In some jurisdictions, rules and regulations may exist governing data security and privacy, such as the EU's General Data Protection Regulation (GDPR); embodiments of the present invention may aid in meeting data security and privacy standards.

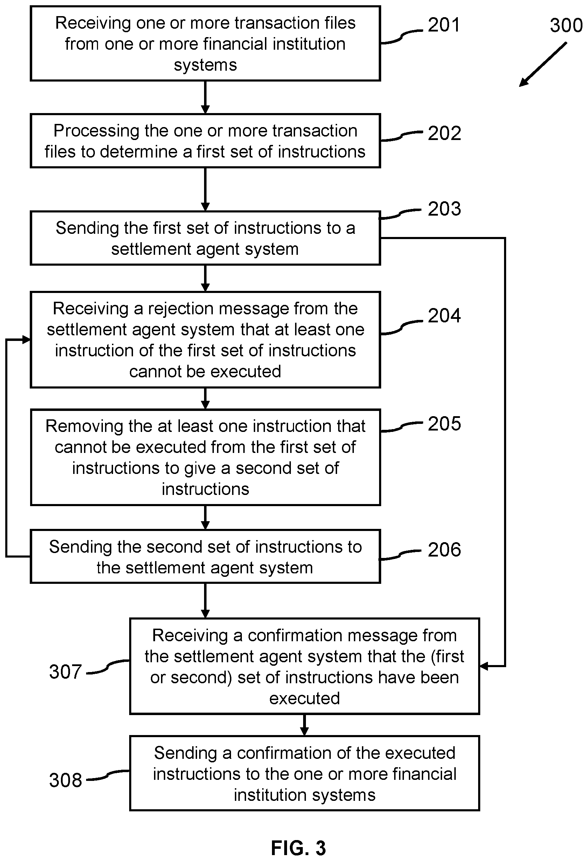

Figure 1 depicts an overview of a system 100, which includes a service provider system 104 or bulk processing system 104. The service provider (system) 104 provides timely, scalable, and cost-effective processing for a large number of payments, with secure and efficient transfer of data, and which is sufficiently robust to handle instances of insufficient liquidity or suspension from the financial system by, for example, carrying out the method of Figures 2 and/or 3. It is a computer-implemented system typically embodied in the form of one or more servers. The execution of the method of Figures 2 and/or 3 may be enabled and/or enhanced through the specific configuration of system 100 shown in Figure 1.

In Figure 1, user or participant 101 and user or participant 107 may be any one or a combination of different entities (e.g., financial or legal entities) not limited to merchants, individual bank accounts, e-wallets, or government agencies. A user (e.g., user 101) may be a payer and another user (e.g., user 107) may be a payee. While two users are shown in Figure 1, there may, in fact, be a larger number of users.

Financial institutions 102, 106 may act on behalf of users; they may include, for example, banks, investment banks, credit unions, brokerage firms, etc. Financial institutions 102, 106 may, in some embodiments, be any entity which is communicatively coupled with the service provider system 104. In some embodiments, a user may be a financial institution (or vice versa).

The service provider system 104 may maintain a list of registered or authorised financial institutions from whom the service provider will accept transaction files. New participants may be provisioned on the service provider system 104 by an onboarding process. Similarly, inactive or terminated participants may be removed from the service provider system 104 via an offboarding process. Offboarding may be a permanent state in the service provider system 104. Alternatively, participants may be suspended. Suspension may be a reversible and temporary state in service provider system 104, while suspended a participant is not permitted to submit new transactions. The suspended participant may have 'read only' access to the system.

A service provider system or bulk payment service 104 can receive transaction files from various financial institutions 102, 106 at the same time for inclusion in a single bulk payment run.

The service provider system or bulk payment service 104 may perform inbound clearing by validating and processing the transactions (e.g., extracting the transactions from the file they were sent in), and then calculates settlement positions and performs settlement with a Settlement Agent 105.

As part of the registration process for a participant to utilise the service provider system or bulk payment system 104, a technical connection is configured during onboarding of the participant. This includes all parameters needed as part of the configuration of the specific channel chosen to receive files. Parameters may include, for example, Legal Entity Identifier, Technical Address etc. In this way, the participant is responsible for maintaining their own connection to the service provider system and responsible submitting and/or receiving files directly.

In some embodiments, connections may be facilitated by a connectivity provider. A connectivity provider is an organisation that provides connectivity and access services for one or more indirectly connected participants that do not own or manage connections by themselves. The connectivity provider can be a participant, third-party service provider, or third-party financial institution (e.g., which maintains a direct connection with the Bulk payment system). Connectivity may be based on international standards, such as implementing, for example, ISO 20022 financial and proprietary messages for entities interacting with the service provider system 104 (other exemplary standards include NACHA-M, EPC, NPC, ISO8583, etc.). Messages or instructions herein may be compliant with standards, such as ISO 20022, NACHA-M, EPC, NPC, ISO8583, etc.. Messages or instructions herein may be compliant with SWIFT standards.

Once the bulk payment has been completed, the service provider system or bulk payment system 104 then performs outbound clearing by processing (e.g., combining the transactions into a file for sending) settled transactions and sending them to the receiving Financial Institution 302, 306.

By limiting and minimising the flow of information, this reduces the amount of personal data being submitted over networks and limits the possibility of such data being intercepted by an unrelated third party. In this example, a transaction file is transmitted from a financial institution (e.g., a first financial institution) 102 to a service provider system 104 for performing the bulk payment service. The financial institution 102 may communicate directly with its payers which can comprise individual consumers and businesses, and can also include other merchants, e-wallets, and government institutions (not shown). The financial institution 102 can process the information received from consumers and businesses in accordance with its internal processes to generate a transaction file. In some embodiments, the transaction file may include sensitive information or data, including, for example, a list of bank account information associated with the payers and payees, and/or personally-identifiable information concerning the payers and payees, such as their names. In other embodiments, the transaction file may include a unique identifier instead of at least some personally-identifiable information. In this way, even if the transaction file is intercepted by a third party, the replaced personally-identifiable information of the payer and payees are protected.

Once received, the transaction files may be processed by the service provider system 104. The servicer provider may perform inbound clearing 104B, e.g., by validating and processing the transaction, calculating settlement positions and/or performing settlement with the Settlement Agent 105. This can include comparing and balancing the contents of a transaction file received from one financial institution with the transaction file received from another financial institution.

Once the transaction files have been processed, the service provider system 104 may generate a first set of instructions. The servicer provider system may then send the first set of instructions to a settlement agent 105. In this way, no information is sent directly from the financial institutions to the settlement agent. Similarly, any non-essential personal information not necessary for processing a transaction can be stripped or removed as it does not have to be included in the one or more instructions. This additional layer of processing further changes the information being transmitted to the settlement agent so that, even if this information were intercepted by a third party, the amount of personal information that may be potentially disclosed is minimised.

A settlement agent 105 is generally an organisation that holds settlement accounts and applies settlement figures to these accounts to effect settlement as part of a clearing service. Clearing is the process of transmitting, reconciling and, in some cases, confirming transfer orders prior to settlement, potentially including the netting of orders and the establishment of final positions for settlement. This function is often performed by a central bank. For example, the following are example settlement agents associated with central banks: T2 (in the Eurozone); RIX (in Sweden); CHAPS (in the UK); Fedwire Funds Service (in the USA). Multiple service provider systems may be linked to a single settlement agent system.

Settlement may be conducted according to a multi-lateral net settlement model (e.g., with a plurality of participants involved in a transaction settlement). With this settlement model, each participant settles its multi-lateral position using a settlement agent. Thus, the settlement agent system, and the service provider system 104, acts as a middleman to facilitate the financial transactions.

The settlement agent system 105 is responsible for executing the one or more instructions and will send a message to the service provider systems to confirm whether the instructions have been executed. As is explained below with respect to Figures 2 and 3, the settlement agent 105 may return either a confirmation that all the instructions have been executed, or that one or more of the instructions cannot be executed. In methods and systems according to the prior art if one or more of the instructions cannot be executed, the entire process must restart once the issue causing the inability to carry out the instructions (e.g. lack of liquidity or suspension of a participant) has been addressed. In accordance with the present invention, if one or more of the instructions cannot be executed, the service provider system 104 may remove the instructions that have been rejected, and retry the process by sending a resulting new set of instructions to the settlement agent. The service provider system 104 may inform a financial institution 102, 106 that an instruction corresponding to said financial institution 102, 106 (e.g., originating from said financial institution) cannot be carried out. Optionally, the financial institution may 102, 106 address an underlying issue (the issue causing the inability to carry out the instructions). Optionally, the financial institution 102, 106 may resend the at least one rejected instruction contained in an additional set of transaction files.

It should be noted only rejected transactions would need to be resubmitted over the network from a financial institution 102, 106. This may lower the likelihood of all the instructions being intercepted by an unrelated third party, and may reduce the quantities of data that need to be transferred over the network (i.e., reducing network overheads). The service provider system 104 may anonymise data (e.g., by removing identifying information such as names and financial details) before sending instructions to the settlement agent. Therefore, data security may be further improved, since, even if instructions are intercepted between the service provider system 104 and the settlement agent 105, sensitive information is not compromised.

By consolidating processing of transaction files from several financial institutions, a more cost-effective and faster transfer of large volumes of transactions may be provided. This also enables smaller payers and payees to take advantage of benefits previously only available to larger payers and payees who can conduct a high volume of transactions daily. By consolidating the transaction files from different payers, it is possible to configure the timing of transactions to match individual customer needs and can be scaled ensure consistent performance even at peak volume. The service provider system 104 can, in some instances, operate at all times, with live service monitoring.

Once processed, the service provider system 104 may send a confirmation to a financial institution associated with a recipient (e.g., a second financial institution) 106, to acknowledge that transactions have or have not been completed. The Financial institution 106 may then communicate the completed or failed transactions directly with its payers/payees which can comprise individual consumers and businesses, and can also include other merchants, and government institutions (not shown). The financial institution can process the information received from consumers and businesses in accordance with its internal processes to generate a transaction file.

In some embodiments, the service provider system 104 may include various sub-domains, and services 104A-104E. The service provider system 104 may be a fully modularised microservice based solution composed of discrete and self-contained functional areas which can be developed, deployed, managed, and scaled independently. For example, clearing 104B and settlement 104E are provided and managed by independent sub-domains while management 104C, self-service 104A, and supporting 104D sub-domains provide multiple services and functionality that may support bulk payment services.

In some embodiments, each module may maintain a log for all activities. These logs may be created in a structured format as per known standards and can be utilised by various modules to perform analysis.

A self-service module 104A can provide users with a user interface for supporting and aiding daily operations. The level of detail and functionality provided by the user interface can be tailored to suit different entities. For example, financial institutions may only require a high-level view of the transactions being conducted with the ability to drill down into more detail as required. Alternatively, other financial institutions, such as smaller merchants, may require the ability to control and change the flow of funds, the associated transaction accounts, and generate reports for daily activities. The self-service user interface may include screens for supporting and aiding daily operations by providing an overview and transparency of internal processing in bulk payment processing.

The self-service user interface 104A may enable users to, for example: meet scalability requirements by adding multiple clearing systems; allow switching to contingency settlement systems in case of emergency situations; manage the participants; provide flexibility in daily operations by allowing operators to move and shift the processing times and by cancelling planned operations for the day for operational excellence; provide tools to participants for managing their connected participants; provide an overview of the weekly schedule; allow participants to enquire about their submitted/received files, batches, transactions, as well as current and past positions; and/or reduce the need for change requests by allowing operators to configure the system from the self-service user interface.

For example, one or more participants of the system can set a liquidity cap via the self-service user interface 104A to cap or restrict the amount of liquidity available for use. This can be a hard cap, a daily cap, or separate caps may be set depending on the purpose of the transaction. The above examples are non-exhaustive, and it is possible to configure the self-service user interface 104A separately in accordance with individual participant requirements. Suspended participants may have 'read only' access to the self-service user interface 104A and are not permitted to make any changes or submit new transactions.

A clearing module 104B may be configured in line with multiple schemes or payment rulebooks. The clearing module 104B may be responsible for processing incoming transactions files and providing an outcome once the transaction files have been processed. Generally, outgoing transactions are generated, in bulk, into batch files rather than providing an outcome for each individual transaction. Processing of the transaction files may include performing validations on these files, batches, and transactions, maintaining running positions for all participants, providing final positions to the settlement component, and/or handling any error while processing the transactions. Where an error relates to insufficient liquidity, financial suspension, or any other error that would render one or more instructions to be non-executable, the clearing module may process the error and generate new instructions so that the bulk payment process can proceed. The clearing module 104B can also generate reports for participants and operators to facilitate daily operations. Additionally or alternatively, details of the reports may be provided to the self-service user interface 104A to be displayed in a user friendly and readable format.

A management or management services module 104C may oversee management of the service provider system 104. The management module 104C may ensure that internal processes across other sub-domains in the service provider system 104 are performed correctly and in a timely manner. The management module 104C may also provide e-tools and services for managing entities, handling daily operations ensuring that bulk payment service functions as per defined requirements and for handling any anomaly in the processing at the earliest. The management module 104C can also provide notifications or alerts to update relevant parties that of the system performance or to send out alerts if an unexpected event occurs. The management module 104C can also be configured and controlled using the self-service user interface. A range of notifications or alerts can be configured to be classified as critical, warning and informational can be configured via the self-service user interface. Additional notifications may be transmitted to system operators via appropriate channels to assist with monitoring performance of the bulk payment service.

A supporting or supporting services module 104D may provide a range of services to support operation of the service provider system 104. The supporting services may be based on, or part of, an international standard, or may be a customised add-on to meet the requirements of a participant. The supporting services may support the other bulk payment service sub-domains to make the internal processing of payments more efficient and scalable. Some examples of supporting services can include monitoring capabilities to enhance the customer experience, and feed data to the self-service user interface. This can include customised reports to meet local data compliance requirements and providing frequent reports to ensure reconciliation at different checkpoints during the day.

A settlement module 104E may support manual or fully automated settlement through connection with one or more settlement agent systems. Connectivity may be based on international standards, such as implementing ISO 20022 financial and proprietary messages or instructions for entities interacting with the service provider system or bulk payment system 104 (other exemplary standards include NACHA-M, EPC, NPC, ISO8583, etc.). Settlement in multiple currencies or contingency settlement procedures may be supported. The settlement module 104E may also include a range of different settlement models that can be reused or can be configured or developed further to meet local needs. For example, for compliance with local legislative requirements or for compatibility with local settlement agent systems. Some settlement models support partial settlement for maximising transactions settled in case of insufficient liquidity with a participant.

The settlement module 104E may receive positions from all the participating clearing systems and performs settlement on these final positions with the settlement agent. The settlement module 104E establishes the connection with the settlement agent. The settlement module 104E may also generate reports for operators to facilitate daily operations or may feed data to one or more supporting services to generate the reports.

In some embodiments, the service provider system can be implemented using Java language. However, the service provider system 104 can also be implemented using other mainstream technology or programming language. By using mainstream technology, this opens the service provider system 104 up to a huge community of developers and a large volume of open-source offerings to ensure compatibility with a wide range of different external systems, while relying on well proven frameworks as a foundation to ensure reliability.

The service provide system 104 may be highly configurable with additional services associated with the message flow, format of communications, business rules, daily cycles, settlement types, and settlement models. Moreover, as the service provider system 104 may function as a separate distinct entity to the one or more financial institutions, the service provider system 104 may be a fully modularised microservice based solution composed of discrete and self-contained functional areas which can be developed, deployed, managed, and scaled independently.

Figure 2 depicts a method 200 for bulk payment processing according to embodiments of the invention. Method 200 may include removing one or more non-executable instructions, such as where there is insufficient liquidity or a financial suspension. The method may be implemented by a computer, such as a service provider system (for example, the service provider system 104 described with respect to Figure 1). Components referred to in Figures 2 and/or 3 may be as described with respect to Figure 1.

In operation 201, one or more transaction files may be received, by the service provider system 104, from one or more financial institution systems or payment systems.

The transaction files may contain a list or other representation of transactions to be conducted, a receiver participant, the amount, and/or other details. The other details may contain sensitive data, such as participant financial account details, participant names, etc. Separate transaction files may be generated as required by the financial institution and can be used to separate transactions to be conducted, for example, based on an account that the funds are to be transferred from, a type or nature of the transactions, or an association with a certain process. For example, a transaction file may be generated for payroll purposes and a separate transaction file for vendor payments.

In operation 202, the one or more transaction files may be processed, by the service provider system 104, to determine a first set of instructions. Instructions may be messages instructing a transaction to take place and may be in accordance with known standards, such as ISO 20022, NACHA-M, EPC, NPC, or ISO8583 standards (e.g., exemplary ISO20022 format instructions/messages include "pacs.009" and "pain.998").

In some embodiments, the service provider system 104 balances the amounts being transferred to minimise the number of individual transactions that must occur. For example, if several amounts are being transferred between multiple accounts, a bi-lateral position of each sender and receiver is calculated so that only a single transaction is required for the overall net amount.

The service provider system 104 can also perform validations on the transaction files, maintain running positions for all participants, provide final positions to the settlement agent system, and/or handle any error while processing the transactions. The service provide system 104 can also generate reports for participants and operators to facilitate daily operations. In essence, the service provider system 104 can settle the position for all participants by calculating a sum of each participant's debits and credits. The sum of a participant's bi-lateral settlement positions may constitute its multi-lateral net settlement position.

Preferably, transactions may be settled via a multi-lateral settlement model. With this settlement model, each participant settles its multi-lateral position via a settlement agent. This is in contrast with bi-lateral settlement, in which participants settle their bi-lateral positions directly with each other. Participants may be directed funded or may require liquidity from another participant. In this scenario, the service provider system 104 may engage with a third-party financial institution to request the required liquidity.

Any non-essential personal information not necessary for processing a transaction can be stripped or removed from the first set of instructions to safeguard against malicious interception of the data.

In operation 203, the first set of instructions may be sent, by the service provider system 104, to a settlement agent system 105 (e.g. as described with respect to Figure 1).

A set of instructions may be a group of one or more instructions, which may be generally associated with one another in that they are handled together according to embodiments of the present invention.

One or more of the instructions may be rejected by the settlement agent system 105. Although the instructions can be rejected for various reasons, this is usually due to insufficient liquidity or a financial suspension.

In some cases, there may be standing instructions set by the participants, the settlement agent, or a funding provider to cap or restrict the amount of liquidity available for use. This can be a hard cap, a daily cap, or separate caps may be set depending on the purpose of the transaction.

Operation of the settlement agent system 105 may be described by way of example with respect to Tables 1 to 9 below.

In operation 204, a rejection message may be received, by the service provider system, from the settlement agent system, that (states that) at least one instruction of the first set of instructions cannot be executed. The rejection message may be in accordance with known standards, such as ISO 20022, NACHA-M, EPC, NPC, or ISO8583 standards.

In some embodiments, each instruction of the first set of instructions is associated with an assignment of a quantity of a resource, including but not limited to, money of a certain currency, from a first participant associated with the instruction to a second participant associated with the instruction.

In some embodiments, the at least one instruction that cannot be executed is not able to be executed because the first participant does not have (or have access to) a sufficient quantity of said resource (e.g., insufficient liquidity). For example, the settlement agent system may determine that the at least one instruction cannot be executed based on an available liquidity of a first participant or payer associated with the at least one instruction. The determination that the at least one instruction cannot be executed may be further based on a debit amount associated with the at least one instruction. For example, the debit amount of a participant may be compared to the available liquidity of that participant to ensure that the available liquidity is larger than the debit amount. Liquidity is merely one example of an issue causing an inability to carry out the at least one instruction. Other reasons or issues causing an inability to carry out the at least one instruction may include a specific participant being blacklisted or a specific transaction or instruction being blocked (e.g., due to suspicious behaviour or a security issue).

In operation 205, the at least one instruction that cannot be executed may be removed, by the service provider system 104, from the first set of instructions to give a second (modified) set of instructions, wherein the second set of instructions differ from the first set of instructions.

In some embodiments, the service provider system 104will remove one or more participants/users (e.g., all instructions of the participants/users) associated with the at least one instruction that cannot be executed.

The service provider system 104 may recalculate the bilateral and/or overall position for all participants. Alternatively, the settlement agent system 105 can remove the debits of failing participants, removing the debit files one at a time until the total debits fall under the available credit, or remove individual transactions one at a time until the total debits fall under the available credit.

In some instances, the service provider system 104may roll-over rejected transactions for retry at a later stage. For example, at a later cycle. Generally, a cycle defines the period between one settlement event and the next, uniquely identified by date and cycle ID. Each cycle may contain clearing and settlement steps.

Modification/removal of instructions may be seen, by way of example, with respect to Tables 1 to 9 below.

In operation 206, the second set of instructions may be sent, by the service provider system 104, to the settlement agent system 105.

In some embodiments, the method may further include sending, by the service provider system 104, an indication of the at least one instruction that cannot be executed to a corresponding financial institution system of the one or more financial institution systems 102, 106.

In some embodiments, the method may further include receiving, by a service provider system 104 and from the corresponding financial institution system or payment system, an additional set of transaction files, the additional set of transaction files at least indicative of the at least one instruction that cannot be executed (or could not previously be executed; the initial issue may have been successfully addressed).

In some embodiments, the settlement agent system 105 is an external clearing system (e.g., external to the service provider system). In some embodiments, the service provider system is a bulk payment system.

Advantageously the method 200 of Figure 2 (and/or Figure 3) provides methods and systems which, unlike those that already exist in the art, do not require restarting the entire process if one or more of the instructions cannot be executed.

In accordance with the present invention, if one or more of the instructions cannot be executed, the service provider system may remove the instructions that have been rejected, and retry the process by sending a resulting new set of instructions to the settlement agent. The service provider system may inform a financial institution that an instruction corresponding to said financial institution (e.g., originating from said financial institution) cannot be carried out. Optionally, the financial institution may address an underlying issue (the issue causing the inability to carry out the instructions). Optionally, the financial institution may resend the at least one rejected instruction contained in an additional set of transaction files.

Only rejected transactions need to subsequently be resubmitted over the network from a financial institution to the service provider system (and then to the settlement agent system); the non-rejected instructions may be resubmitted directly by the service provider system to the settlement agent system.

The data transfer between a financial institution and the service provider system can be vulnerable to incidents which compromise security of the transferred data. For example, malicious attempts may be made to intercept data transfers and possibly extract information pertaining to transactions and/or participants.

The data transfer between a financial institution and the service provider system requires network bandwidth resources, which increase as more data is transferred.

By reducing the quantity of transaction files transferred between financial institutions and service provider systems, embodiments of the present invention may reduce data transfer overheads on the network between the financial institution and the service provider system, improve data security of transactions, and reduce the average time taken to carry out a transaction or instruction.

The service provider system may anonymise data (e.g., by removing identifying information such as names and financial details) before sending instructions to the settlement agent. Therefore, data security and privacy may be improved, since, even if instructions are intercepted between the service provider system and the settlement agent, sensitive information is not compromised, and data transfer overheads on the network between the service provider system and the settlement agent may be reduced due to the decreased quantity of data. In some jurisdictions, rules and regulations may exist governing data security and privacy, such as the EU's General Data Protection Regulation (GDPR). Embodiments of the present invention may aid in meeting data security and privacy standards.

By consolidating processing of transaction files from several financial institutions, the service provider system can provide a more cost-effective and faster transfer for large volumes of transactions. This also enable smaller payers to take advantage of benefits previously only available to larger payers who can conduct a high volume of transactions daily. By consolidating the transaction files from different payers, it is possible to configure the timing of transactions to match individual customer needs and can be scaled ensure consistent performance even at peak volume. The service provider system can, in some instance, operate 24 hours a day, 7 days a week, 365 days a year, with live service monitoring.

The servicer provider system may also utilise strong encryption and tokenization processes ensuring resilient and secure bulk file processing, for example, in line with internationally recognised standards for financial transaction systems. For example, by employing data-rich ISO 20022 payment and non-payment related messages. ISO 20022 refers to a standard prepared by Technical Committee ISO (International Standards Organisation) TC68 Financial Services defining XML message fields, instructions, formats, and protocols designed to provide a universal financial industry message scheme. Other exemplary messaging standards that may be used include NACHA-M, EPC, NPC, ISO8583, etc.

Figure 3 depicts a method 300 for bulk payment processing according to embodiments of the invention. Figure 3 may provide context for method 200 of Figure 2.

Operations 201 to 206 of method 300 may be the same or substantially the same as operations 201 to 206 in method 200. As such, everything written with respect to Figure 2 is also true with respect to Figure 3 and is not repeated below.

When sending the first set of instructions to a settlement agent system in operation 203, it may be that, as in method 200 and Figure 2, a rejection message is subsequently received indicating that at least one instruction of the first set of instructions cannot be executed. However, in other cases (e.g., where there is sufficient liquidity of all participants and no relevant financial suspensions), operation 307 make take place, wherein a confirmation message may be received from the settlement agent system that the (first or second) set of instructions (or a subset thereof) has been executed. Operation 307 may additionally or alternatively take place after sending a second set of instructions to the settlement agent system, as in operation 206. For example, the second set of instructions are allowable.

In some embodiments, operation 206 (e.g., as described with respect to Figure 2) may not lead to a successful outcome (or confirmation message), and may instead lead to an unsuccessful outcome. For example, liquidity (or resources) of a participant may fall during a time frame of the execution of the method, meaning that earlier during the method liquidity was sufficient and now liquidity is insufficient (e.g., as assessed through a third party). Therefore, a second set of instructions may still not be able to be executed, as determined by the settlement agent system. In such a scenario (as well as others), the method may loop back to operation 204. In other words, a rejection message may be received from the settlement agent system that at least one instruction of the second set of instructions cannot be executed.

In operation 308, a confirmation of the executed instructions may be sent to the one or more financial institution systems. For example, the financial institution to which each instruction corresponds may be notified that said instruction has been successfully executed.

A system may be provided herein, such as the service provider system of Figure 1, which may be configured to execute operations of method 200 and/or 300. A computer program product may be provided herein, wherein the computer program includes instructions which, when the program is executed by a computer, cause the computer to carry out operations of method 200 and/or 300. A computer-readable storage medium may be provided herein, wherein the computer-readable storage medium includes instructions which, when executed by a computer, cause the computer to carry out operations of method 200 and/or 300.

In Tables 1 to 9 and the corresponding description, one exemplary instance is outlined which relates to an execution of a method according to the present invention. The example of Tables 1 to 9 refer to T2 real-time gross settlement (T2 RTGS), however, this is merely one example of a settlement procedure or methodology that may be used, and is not limiting in the present invention.

Based on balances of participants, a settlement agent or component (e.g., component 105 of Figure 1) may calculate a liquidity transfer request or instructions to cover net positions. The resource or liquidity may be in any units or currency.

**Table 1**

| **Participant** | **A** | **B** | **C** | **D** |
|---|---|---|---|---|
| Net position | -50 | -150 | 50 | 150 |
| Sub-account balance | 0 | 30 | 0 | 0 |
| Liquidity transfer requirement | 50 | 120 | 0 | 0 |

However, in this example, Participant B is only able to transfer 119 (when 120 where requested) from a dedicated cash account (DCA) to the sub-account of participant B. Hence, T2 real-time gross settlement (T2 RTGS) responds with a "Partially Accepted" response to the settlement agent or component.

**Table 2**

| **Participant** | **Requested Funds** | **T2 RTGS Response** | **Liquidity transfered** |
|---|---|---|---|
| A | 50 | Accepted (ACSC) | 50 |
| B | 120 | Partially Accepted (COPS) | 119 |
| C | 0 | | |
| D | 0 | | |

Upon receiving a response, the settlement component may update the sub-account balances and validate if there is sufficient liquidity. Participant B has a balance of 149 (when 150 is needed), hence liquidity is insufficient for Participant B.

**Table 3**

| **Participant** | **A** | **B** | **C** | **D** |
|---|---|---|---|---|
| Sub-account balance | 0 | 30 | 0 | 0 |
| Net position | -50 | -150 | 50 | 150 |
| Is liquidity sufficient? | Yes | No | Yes | Yes |

Since liquidity is insufficient for participant B the settlement component may inform a clearing component (or similar) to remove participant B from settlement. The clearing component may correspond to component 104B of Figure 1. Informing may correspond to the receiving of operation 204 of Figures 2 and 3.

**Table 4**

| **Participant** | **A** | **B** | **C** | **D** |
|---|---|---|---|---|
| Remove? | No | Yes | No | No |

Consequently, the clearing component (or similar) may remove all bilateral positions for participant B from the Final Settlement Positions and recalculate net positions for the remaining participants. This operation(s) may correspond to operation 205 of Figures 2 and 3. Removing is illustrated with crossed out figures in Table 5 below.

**Table 5**

| **Sender\Receiver** | **A** | **C** | **D** |
|---|---|---|---|
| A - Bilateral position | 0 | 50 | 50 |
| C - Bilateral position | 25 | 0 | 25 |
| D - Bilateral position | 0 | 0 | 0 |
| Sum as sender | -100 | -50 | 0 |
| Sum as receiver | 25 | 50 | 75 |
| Net Position | -75 | 0 | 75 |

The clearing component may send the updated positions to the settlement component. The settlement component may once again start a settlement procedure with T2 RTGS to receive the participants' sub-account balances to calculate a liquidity transfer request. Based on the received balances the settlement component requests T2 RTGS to fund the subaccount of Participant A with 25. No requests are made for Participant C and D since they both have a positive net position.

**Table 6**

| **Participant** | **A** | **C** | **D** |
|---|---|---|---|
| Net position | -75 | 0 | 75 |
| Sub-account balance | 50 | 0 | 0 |
| Liquidity transfer req. | 25 | 0 | 0 |

T2 RTGS may confirm that the requested amounts are available and have been transferred.

**Table 7**

| **Participant** | **Requested Funds** | **T2 RTGS Response** | **Settled Amount** |
|---|---|---|---|
| A | 25 | Accepted (ACSC) | |
| C | 0 | | |
| D | 0 | | |

Upon receiving the response from the settlement component, the participants sub-account balance may be updated and it may be validated that there is sufficient liquidity to cover the net positions.

**Table 8**

| **Participant** | **A** | **C** | **D** |
|---|---|---|---|
| Sub-account balance | 75 | 0 | 0 |
| Net position | -75 | 0 | 75 |
| Is liquidity sufficient? | Yes | Yes | Yes |

Upon validation the settlement component may send settlement instructions to T2 RTGS which may respond with Accepted, showing that settlement has been completed.

**Table 9**

| **Participant** | **Settlement Instructions** | **Instruct Amount** | **T2 RTGS Response** |
|---|---|---|---|
| A | Debit Sub-account & Credit Technical Account BPS | 75 | Accepted (ACSC) |
| D | Debit Technical Account BPS & Credit Sub-account | 75 | Accepted (ACSC) |

The settlement component may confirm settlement status to the clearing component.

While the foregoing is directed to exemplary embodiments of the present invention, it will be understood that the present invention is described herein purely by way of example, and modifications of detail can be made within the scope of the invention. Furthermore, one skilled in the art will understand that the present invention may not be limited by the embodiments disclosed herein, or to any details shown in the accompanying figures that are not described in detail herein or defined in the claims. Indeed, such superfluous features may be removed from the figures without prejudice to the present invention.

Moreover, other and further embodiments of the invention will be apparent to those skilled in the art from consideration of the specification, and may be devised without departing from the basic scope thereof, which is determined by the claims that follow.

## Claims

1. A computer-implemented method for bulk payment processing, the method comprising:
receiving, by a service provider system, one or more transaction files from one or more financial institution systems;
processing, by the service provider system, the one or more transaction files to determine a first set of instructions;
sending, by the service provider system to a settlement agent system, the first set of instructions;
receiving, by the service provider system, a rejection message from the settlement agent system that at least one instruction of the first set of instructions cannot be executed;
removing, by the service provider system, the at least one instruction that cannot be executed from the first set of instructions to give a second set of instructions, the second set of instructions differing from the first set of instructions; and
sending, by the service provider system, the second set of instructions to the settlement agent system.

2. The method of claim 1, further comprising:
sending, by the service provider system, an indication of the at least one instruction that cannot be executed to a corresponding financial institution system of the one or more financial institution systems.

3. The method of claim 2, further comprising:
receiving, by a service provider system and from the corresponding financial institution system, a second set of transaction files, the second set of transaction files at least indicative of the at least one instruction that cannot be executed.

4. The method of any one of the preceding claims, wherein each instruction of the first set of instructions is associated with an assignment of a quantity of a resource from a first participant associated with the instruction to a second participant associated with the instruction.

5. The method of claim 4, wherein the at least one instruction that cannot be executed is not able to be executed because the first participant does not have a sufficient quantity of said resource.

6. A system for bulk payment processing, the system comprising:
a service provider system, the service provider system configured to:
receive one or more transaction files from one or more financial institution systems;
process the transaction file to determine a first set of instructions;
send the first set of instructions to a settlement agent system;
receive a rejection message from the settlement agent system that at least one instruction of the first set of instructions cannot be executed;
based on the rejection message, increasing the amount of instructions that can be completed by removing the at least one instruction that cannot be executed from the first set of instructions to give a second set of instructions, the second set of instructions differing from the first set of instructions; and
send the second set of instructions to the settlement agent system.

7. The system of claim 6, wherein the service provider system is further configured to:
send an indication of the at least one instruction that cannot be executed to a corresponding financial institution system of the one or more financial institution systems.

8. The system of claim 7, wherein the service provider system is further configured to:
receive from the corresponding financial institution system, a second set of transaction files, the second set of transaction files at least indicative of the at least one instruction that cannot be executed.

9. The system of any one of claims 6 to 8, wherein each instruction of the set of instructions is associated with an assignment of a quantity of a resource from a first participant associated with the instruction to a second participant associated with the instruction, and the at least one instruction that cannot be executed is not able to be executed because the first participant does not have a sufficient quantity of said resource.

10. The system of any one of claims 6 to 9, wherein the service provider system is configured to remove data from the first set of instructions, from which participants associated with the one or more transaction files may be identified by a third party.

11. The system of any one of claims 6 to 10, wherein the settlement agent system is an external clearing system.

12. The system of any one of claims 6 to 11, wherein the service provider system is a bulk payment system.

13. A computer program product comprising instructions which, when the program is executed by a computer, cause the computer to carry out the method of any of claims 1 to 5.

14. A computer-readable storage medium comprising instructions which, when executed by a computer, cause the computer to carry out the method of any of claims 1 to 5.
